(19) Europäisches Patentamt

European Patent Office

Office européen des brevets

(11) **EP 1 743 223 B1**

(12) **EUROPEAN PATENT SPECIFICATION**

| | |
|---|---|
| (45) Date of publication and mention of the grant of the patent:<br>**10.10.2007 Bulletin 2007/41** | (51) Int Cl.:<br>***G05B 13/04*** *(2006.01)* |
| (21) Application number: **05731516.0** | (86) International application number:<br>**PCT/CH2005/000231** |
| (22) Date of filing: **25.04.2005** | (87) International publication number:<br>**WO 2005/103847 (03.11.2005 Gazette 2005/44)** |

(54) **SCHEDULING OF INDUSTRIAL PRODUCTION PROCESSESS**

ABLAUFPLANUNG VON INDUSTRIELLEN PRODUKTIONSPROZESSEN

PLANIFICATION DE PROCESSUS DE PRODUCTION INDUSTRIELS

(84) Designated Contracting States:
**AT BE BG CH CY CZ DE DK EE ES FI FR GB GR HU IE IS IT LI LT LU MC NL PL PT RO SE SI SK TR**

(30) Priority: **27.04.2004 EP 04405261**

(43) Date of publication of application:
**17.01.2007 Bulletin 2007/03**

(73) Proprietor: **ABB RESEARCH LTD.**
**8050 Zürich (CH)**

(72) Inventors:
• **STOTHERT, Alec**
**Westborough, MA 01581 (US)**
• **PONCET, Andreas**
**CH-8049 Zürich (CH)**

(74) Representative: **ABB Patent Attorneys**
**c/o ABB Schweiz AG,**
**Intellectual Property (CH-LC/IP),**
**Brown Boveri Strasse 6**
**5400 Baden (CH)**

(56) References cited:
**US-A- 4 698 745**

• **E. GALLESTREY ET AL.: "Using Model Predictive Control and Hybrid Systems for Optimal Scheduling of Industrial Processes" AT AUTOMATISIERUNGSTECHNIK, vol. 51, no. 6, 2003, pages 285-293, XP002319197 cited in the application**
• **P. TONDEL ET AL.: "An Algorithm for Multi-Parametric Quadratic Programming and Explicit MPC Solutions" AUTOMATICA, vol. 39, no. 3, March 2003 (2003-03), pages 489-497, XP002319198 cited in the application**

**Description**

FIELD OF THE INVENTION

The invention relates to the field of industrial production processes and their optimal scheduling. It departs from a production scheduler and a method of optimizing an industrial production schedule as described in the preamble of claims 1 and 3, respectively.

BACKGROUND OF THE INVENTION

Operators of modem industrial processes are increasingly confronted with the simultaneous tasks of satisfying technological, contractual and environmental constraints. For example, there is pressure on operators and owners to increase profit and margins while at the same time there is a high public interest on sustainable and environmentally friendly use of natural resources. Profit maximization production scheduling tasks capable of handling the aforementioned requirements can often be formulated as the minimization problem of a performance index, objective function or cost function in a condensed way as follows:

$$\min_{u} \quad u^T Q u + cu - pu$$

$$s.t. \quad Au \leq b$$

$u \in \Re^n, c \in \Re^{1 \times n}, p \in \Re^{1 \times n}, Q \in \Re^{n \times n}$

$A \in \Re^{m \times n}, b \in \Re^m$

Here, the matrix $Q$ is assumed to be symmetric (this entails no loss of generality, because any quadratic form can be rewritten as $\sum_{i=1}^{n} \sum_{j=1}^{n} Q_{ij} u_i u_j$ with the constraints $Q_{ji} = Q_{ij}, i, j = I, ..., n$). Furthermore, the matrix $Q$ is assumed to be positive semi-definite, in order for the optimization problem to be convex and have a global optimum solution.

In the above minimization problem, u is the production decision variable (e.g., the vector of production values indicating the quantity of each product to be produced), $p$ is the sales price (e.g., row vector of prices obtainable for each product), $Q$ and $c$ are cost matrices of appropriate size that define the production cost, and A (constraint matrix) and $b$ (constraint vector) define constraints or boundaries on the production (e.g. minimum and maximum production limits). The solution $u^*$ of the above problem gives the preferred production values or quantities of the various products for a given set of parameters $p, Q, c, A$ and $b$.

However, the vectors of production costs and prices generally take different values at different times. Hence the drawback of such a formulation is that the time dependent parameters, e.g. sales price $p$ and the production limit values $A$ and $b$, must be known in advance and must be fixed. In practice this is never the case, as e.g. the price values are uncertain or the production costs might change abruptly. This implies that the optimization problem has to be re-solved in order to compute the optimum production schedule, which is known as the rescheduling problem. One approach to the rescheduling problem is to use a receding horizon or Model Predictive Control (MPC) scheme.

In the article "Using Model Predictive Control and Hybrid Systems for Optimal Scheduling of Industrial Processes", by E. Gallestey et al., AT Automatisierungstechnik, Vol. 51, no. 6, 2003, pp. 285-293, a cascade approach is presented, based on an outer and an inner loop Model Predictive Control (MPC) scheme. The outer loop MPC algorithm computes reference schedules by using objective functions related to the plant economic goals (minimum electricity consumption and fuel usage, ageing costs, respect of contractual constraints such as customer orders or supply of raw materials, etc.). Applied to the practical case of a combined cycle power plant (CCPP), the scheduling process uses forecast prices for electricity and steam generated by the CCPP and energy demands as inputs and returns an operation schedule indicating when the gas and steam turbines should be turned on/off and what production level should be selected. Updating or re-computation of this reference schedule is done every two or more days. The inner loop's goal is to react to deviations due to changing conditions by penalizing deviations from the reference schedule. Using real-time plant data, the necessary corrections are computed online every hour or two. This cascade approach allows that short-term rescheduling and production plan corrections are handled with minimum changes to the overall plant schedule, and in a way suitable for implementation under real conditions. Yet no matter how sophisticated the assignment of the changing parameters to the one of the two loops and the choice of the respective receding horizons may be, an optimization problem with appreciable computational efforts has to be solved for the short-term corrections.

On the other hand, in the field of controller design, and in particular in the area of Model Predictive Control (MPC), a significant amount of research effort has gone into explicit computation of MPC controllers for use in embedded environments. In the article "An Algorithm for Multi-Parametric Quadratic Programming and Explicit MPC Solutions" by P. Tondel et al., Automatica, Vol. 39, no. 3, March 2003, pp 489-497, constrained linear MPC optimization problems are investigated. The state variable is converted into a vector of parameters and the MPC problem is algebraically reformulated as a multi-parametric quadratic programming (mp-QP) problem. Explicit solutions, i.e. analytic expressions for an input variable suitable for implementation in on-line controllers are shown to exist, c.f. theorem 1 of the paper, and obtained by off-line solving the mp-QP problem. In this context, multi-parametric programming stands for solving an optimization problem for a range (e.g. a time series) of parameter values of a vector of parameters.

DESCRIPTION OF THE INVENTION

It is therefore an objective of the invention to adapt an industrial production schedule to changing conditions in real-time and with reasonable computational efforts. These objectives are achieved by a production scheduler for an optimal scheduling of industrial production processes and a method of optimizing an industrial production schedule according to the claims 1 and 3. Further preferred embodiments are evident from the dependent patent claims.

According to the invention, an algebraic expression or analytic function depending on parameter variables of an industrial production process is provided for rescheduling or adaptation of the industrial production schedule to a change in the values of said parameter variables. Hence, no time-consuming optimization problem has to be solved online upon the occurrence of a changing parameter value. The algebraic expression results from a multi-parametric quadratic programming (mp-QP) reformulation of the original optimization problem involving said parameter variables as parameters. A QP-variable is defined as a transformation of the original production decision variable via augmentation or mapping. The proposed solution however is limited to situations where the original optimization problem can be represented by a convex objective function that is quadratic in the decision variable and bilinear in the decision and parameter variable. No logical process related constraints are taken into account.

The invention shows that an approach based on multi-parametric programming can be used for the rescheduling problems described in the introductory part. The primary advantage over existing techniques is the much faster rescheduling computation times. It is to be understood that the protection for the invention is not intended to be limited to the actual scheduler and method listed, but is expected to cover the corresponding computer programs as well.

BRIEF DESCRIPTION OF THE DRAWINGS

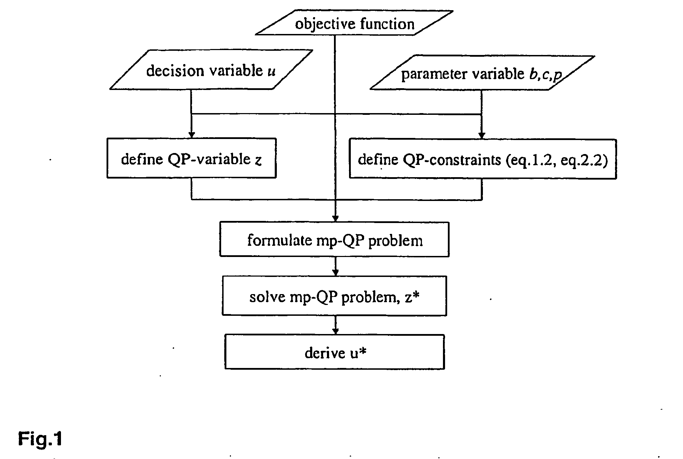

The subject matter of the invention will be explained in more detail in the following text with reference to preferred exemplary embodiments which are illustrated in the attached drawing (fig.1), which shows a flow chart of a method of deriving the optimal production schedule $u^*(b, c, p)$.

DETAILED DESCRIPTION OF PREFERRED EMBODIMENTS

As the techniques for solving multi-parametric quadratic programs (mp-QP) are known in the literature as set out in the introductory part, the invention shows how the rescheduling problem can be reformulated as an mp-QP. In the following two embodiments, the sale prices $p$ and the production costs $c$ are considered to be time-dependent parameters of the original scheduling problem, but uncertainties on other parameters could also be treated in a similar way. For instance, the vector $b$ of production limits could be, albeit in a straightforward manner, included in a mp-QP formulation.

In Fig.1, a flow chart depicts the main steps required for obtaining the optimal production schedule $u^*(b, c, p)$ according to an embodiment of the invention. The ingredients of the original optimization problem, i.e. the objective function for and the constraints on the original production decision variable $u$ are redefined or transformed. In order to formulate the mp-QP problem, a QP-variable $z$ is introduced and QP-constraints on this QP-variable $z$ are established. As set out above, the mp-QP problem can be solved analytically, yielding an algebraic expression for the optimum QP-variable $z^*$, from which in turn the optimum decision variable $u^*$ can be reversely determined.

Using the variable definitions as set out above, the relevant difference between the potentially uncertain or time-dependent production parameters $c$ and $p$ are combined into an augmenting parameter variable $P$ by noting

$$P = (c - p)^T, P \in \Re^n.$$

A QP-variable $z$ is then defined by augmenting the original production decision variable $u$ with the augmenting parameter variable $P$

$$z \in \Re^{n+n}, \quad z = \left[u^T \ (c-p)\right]^T = \left[u \ P\right]$$

and the initial rescheduling optimization problem is rewritten as an mp-QP problem of the following form:

$$\min_{z} z^T \begin{bmatrix} Q & I_n \\ 0 & 0 \end{bmatrix} z . \qquad (eq.1.1)$$

The constraints on the decision variable $u$ are complemented by constraints on the augmenting parameter variable $P$ in order to constrain the production parameters c and $p$ to their actual values. The resulting constraints on the QP-variable $z$ thus become

$$s.t. \quad \begin{bmatrix} A & 0 \\ 0 & I_n \\ 0 & -I_n \end{bmatrix} z \le \begin{bmatrix} b \\ P \\ -P \end{bmatrix} \Big\} (c-p)^T \equiv P \qquad (eq.1.2)$$

According to the abovementioned article by Tondel et al., the algebraic expression or analytic solution of a quadratic program is a piecewise-affine mapping. In consequence, the solution $z^*$ of the mp-QP problem is of the explicit form

$$z^*(P) = \begin{cases} F_1 P + G_1 & if \quad H_1 P \le K_1 \\ \vdots & \vdots \\ F_r P + G_r & if \quad H_r P \le K_r \end{cases},$$

where, for $i = 1, \ldots, r$, the parameters $F_i$, $G_i$, $H_i$, and $K_i$ are matrices of appropriate size and the index $r$ refers to an area in the space of the parameter $P$. This implies that the optimal values of the original production decision variable $u^*(P) = u^*(c, p)$ can be computed directly from the parameters $c, p$ without having to solve an optimization problem. Hence, an entire production schedule can be established given the known future parameter values, and/or can be adapted on-line upon a parameter change with a reasonable computational effort.

In the second embodiment, the requirements regarding the properties of the cost matrix $Q$ are slightly more stringent: $Q$ is assumed to be (strictly) positive definite. It implies that $Q$ is invertible, which allows to centralize the quadratic form, thereby reducing the complexity of the multi-parametric optimization problem significantly. Using the corallary below, the original scheduling problem

$$\min_{u} \quad u^T Q u + (c-p) u$$

$$s.t. \quad Au \le b$$

can be centralized to

$$\min_{z} \quad z^T Q z \qquad\qquad\qquad (eq.2.1)$$

$$s.t. \quad Az \leq b + \frac{1}{2} A Q^{-1}(c-p)^T \qquad\qquad\qquad (eq.2.2)$$

if and only if $Q$ is positive definite (which ensures, given the symmetry $Q = Q^T$, that $Q$ is invertible). Here, the QP-variable $z$ is defined by mapping the parameters $c$, $p$ on the original production decision variable $u$ in the following way: $z = u + \frac{1}{2}Q^{-1}(c-p)^T$. Again, from the solution $z^*(A, Q, c, p)$ the optimal production value $u^* = z^* - \frac{1}{2}Q^{-1}(c-p)^T$ is obtained. It is to be noted that the resulting multi-parametric problem has fewer decision variables (dimension of $z = n$) as compared to the first embodiment (dimension of $z = n+n$).

*Corollary:*

Making use of the symmetry of $Q$,

$$(y-y_0)^T Q(y-y_0) = y^T Q y - y^T Q y_0 - y_0^T Q y + y_0^T Q y_0$$
$$= y^T Q y + d^T y + y_0^T Q y_0$$

where $d = -2Qy_0$ and hence $y_0 = -\frac{1}{2}Q^{-1}d$. It follows that

$$\min_{y} \quad y^T Q y + d^T y + y_0^T Q y_0$$

is equivalent to

$$\min_{y} \quad y^T Q y + d^T y$$

as the term $y_0^T Q y_0$ is constant in the optimization variable $y$.

**Claims**

1.  A production scheduler for an optimal scheduling of industrial production processes determined by

    - a decision variable ($u$) and constraints ($A, b$) on the decision variable ($u$),
    - parameter variables ($b, c, p$) representing generalized limits, costs and revenues,
    - a positive semi-definite cost matrix ($Q$),
    - an objective function depending quadratically, via the cost matrix ($Q$), on the decision variable ($u$) and depending bilinearly on the decision variable ($u$) and the parameter variables ($b, c, p$),

    wherein the scheduler comprises computing means for calculating an optimal production schedule $u^*$ for a given set of parameter values,

**characterized in that** the scheduler comprises computing means for evaluating an algebraic expression for the optimal production schedule $u^*(b, c, p)$ as a function of the parameter variables $(b, c, p)$.

2. The production scheduler according to claim 1, **characterized in that** the algebraic expression for the optimal production schedule $u^*(b, c, p)$ is obtained by

   a) formulating a multi-parametric quadratic programming (mp-QP) problem, including

      - a QP-variable $(z)$ being defined based on the decision variable $(u)$ and the parameter variables $(b, c, p)$,
      - the objective function being rewritten in general quadratic form (eq.1.1, eq.2.1) in the QP-variable $(z)$,
      - linear constraints on the QP-variable $(z)$ (eq.1.2, eq.2.2) being defined based on the constraints $(A, b)$ on the decision variable $(u)$ and the parameter variables $(b, c, p)$,

   b) solving the mp-QP problem for an algebraic expression of the optimal QP-variable $z^*$ as a function of the parameter variables $(b, c, p)$, and
   c) deriving the algebraic expression for the optimal production schedule $u^*(b, c, p)$ from the algebraic expression of the optimal QP-variable $z^*$.

3. A method of optimizing a production schedule of an industrial production process determined by

      - a decision variable $(u)$ and constraints $(A, b)$ on the decision variable $(u)$,
      - parameter variables $(b, c, p)$ representing generalized limits, costs and revenues,
      - a positive semi-definite cost matrix $(Q)$,
      - an objective function depending quadratically, via the cost matrix $(Q)$, on the decision variable $(u)$ and depending bilinearly on the decision variable $(u)$ and the parameter variables $(b, c, p)$,

   **characterized in that** an algebraic expression for the optimal production schedule $u^*(b, c, p)$ as a function of the parameter variables $(b, c, p)$ is obtained by

   a) formulating a multi-parametric quadratic programming (mp-QP) problem, including

      - a QP-variable $(z)$ being defined based on the decision variable $(u)$ and the parameter variables $(b, c, p)$,
      - the objective function being rewritten in general quadratic form (eq.1.1, eq.2.1) in the QP-variable $(z)$,
      - linear constraints on the QP-variable $(z)$ (eq.1.2, eq.2.2) being defined based on the constraints $(A, b)$ on the decision variable $(u)$ and the parameter variables $(b, c, p)$,

   b) solving the mp-QP problem for an algebraic expression of the optimal QP-variable $z^*$ as a function of the parameter variables $(b, c, p)$,
   c) deriving the algebraic expression for the optimal production schedule $u^*(b, c, p)$ from the algebraic expression of the optimal QP-variable $z^*$,

   and **in that** the algebraic expression for the optimal production schedule $u^*(b, c, p)$ obtained is evaluated as a function of the parameter variables $(b, c, p)$.

4. The method according to claim 3, **characterized in that** the algebraic expression for the optimal production schedule $u^*(b, c, p)$ is evaluated on-line upon a change in the value of a parameter variable $(b, c, p)$.

5. The method according to claim 3, **characterized in that** the QP-variable $(z)$ has the twofold dimension as the decision variable $(u)$ and is obtained by augmenting the decision variable $(u)$ with an augmenting parameter variable $(P)$ equal to a difference between the parameter variables $(c-p)$, and **in that** constraints on the QP-variable $(z)$ (eq. 1.2) constrain the augmenting parameter variable $(P)$ to its given value.

6. The method according to claim 3, wherein the matrix $Q$ is positive definite, **characterized in that** the QP-variable $(z)$ has the same dimension as the decision variable $(u)$ and is obtained by mapping the parameter variables $(c, p)$ on the decision variable $(u)$.

**Patentansprüche**

1. Produktionsplaner zur optimalen Planung industrieller Produktionsprozesse bestimmt durch

   - eine Entscheidungsvariable ($u$) und Nebenbedingungen ($A, b$) für die Entscheidungsvariable ($u$),
   - Parametervariablen ($b, c, p$) repräsentierend verallgemeinerte Grenzwerte, Kosten und Erlöse,
   - eine positiv-semidefinite Kostenmatrix ($Q$),
   - eine Zielfunktion, welche über die Kostenmatrix ($Q$) quadratisch von der Entscheidungsvariablen ($u$) abhängt und bilinear von der Entscheidungsvariablen ($u$) und den Parametervariablen ($b, c, p$) abhängt,

   wobei der Produktionsplaner Rechenmittel zur Berechnung eines optimalen Produktionsplanes u* für einen gegebenen Satz von Parameterwerten umfasst,
   **dadurch gekennzeichnet, dass** der Produktionsplaner Rechenmittel zur Auswertung eines algebraischen Ausdruckes für den optimalen Produktionsplan $u^*(b, c, p)$ als Funktion der Parametervariablen ($b, c, p$) umfasst.

2. Produktionsplaner gemäss Anspruch 1, **dadurch gekennzeichnet, dass** der algebraische Ausdruck für den optimalen Produktionsplan $u^*(b, c, p)$ erhalten wird durch

   a) Formulierung eines Quadratischen Programmierproblems mit mehreren Parametern (mp-QP) und

   - einer QP-Variablen ($z$), definiert basierend auf der Entscheidungsvariablen ($u$) und den Parametervariablen ($b, c, p$),
   - der Zielfunktion, umgeschrieben in allgemeiner quadratischer Form (eq.1.1, eq.2.1) als Funktion der QP-Variablen ($z$),
   - linearen Nebenbedingungen für die QP-Variable ($z$) (eq.1.2, eq.2.2), definiert basierend auf den Nebenbedingungen ($A, b$) für die Entscheidungsvariable ($u$) und den Parametervariablen ($b, c, p$),

   b) Auflösen des Quadratischen Programmierproblems (mp-QP) nach einem algebraischen Ausdruck für die optimale QP-Variable $z^*$ als Funktion der Parametervariablen ($b, c, p$), und
   c) Ableiten des algebraischen Ausdruckes für den optimalen Produktionsplan $u^*(b, c, p)$ aus dem algebraischen Ausdruck für die optimale QP-Variable $z^*$.

3. Methode zur Optimierung eines Produktionsplanes eines industriellen Produktionsprozesses bestimmt durch

   - eine Entscheidungsvariable ($u$) und Nebenbedingungen ($A, b$) für die Entscheidungsvariable ($u$),
   - Parametervariablen ($b, c, p$) repräsentierend verallgemeinerte Grenzwerte, Kosten und Erlöse,
   - eine positiv-semidefinite Kostenmatrix ($Q$),
   - eine Zielfunktion, welche über die Kostenmatrix ($Q$) quadratisch von der Entscheidungsvariablen ($u$) abhängt und bilinear von der Entscheidungsvariablen ($u$) und den Parametervariablen ($b, c, p$) abhängt,

   **dadurch gekennzeichnet, dass** ein algebraischer Ausdruck für den optimalen Produktionsplan $u^*(b, c, p)$ als Funktion der Parametervariablen ($b, c, p$) erhalten wird durch

   a) Formulierung eines Quadratischen Programmierproblems mit mehreren Parametern (mp-QP) und

   - einer QP-Variablen ($z$), definiert basierend auf der Entscheidungsvariablen ($u$) und den Parametervariablen ($b, c, p$),
   - der Zielfunktion, umgeschrieben in allgemeiner quadratischer Form (eq.1.1, eq.2.1) als Funktion der QP-Variablen ($z$),
   - linearen Nebenbedingungen für die QP Variable ($z$) (eq.1.2, eq.2.2), definiert basierend auf den Nebenbedingungen ($A, b$) für die Entscheidungsvariable ($u$) und den Parametervariablen ($b, c, p$),

   b) Auflösen des Quadratischen Programmierproblems (mp-QP) nach einem algebraischen Ausdruck für die optimale QP-Variable $z^*$ als Funktion der Parametervariablen ($b, c, p$),
   c) Ableiten des algebraischen Ausdruckes für den optimalen Produktionsplan $u^*(b, c, p)$ aus dem algebraischen Ausdruck für die optimale QP-Variable $z^*$,

   und dass der erhaltene algebraische Ausdruck für den optimalen Produktionsplan $u^*(b, c, p)$ als Funktion der Parametervariablen (*b, c, p*) ausgewertet wird.

4. Methode gemäss Anspruch 3, **dadurch gekennzeichnet, dass** der algebraische Ausdruck für den optimalen Produktionsplan *u*\*(*b, c, p*) on-line ausgewertet wird sobald ein Wert einer Parametervariablen (*b, c, p*) geändert hat.

5. Methode gemäss Anspruch 3, **dadurch gekennzeichnet, dass** die QP-Variable (*z*) die zweifache Dimension der Entscheidungsvariablen (*u*) aufweist und erhalten wird durch Vergrösserung der Entscheidungsvariablen (*u*) mit einer Vergrösserungsparametervariablen (*P*) welche gleich einer Differenz zwischen den Parametervariablen (*c-p*) ist, und dass Nebenbedingungen für die QP-Variable (*z*) (eq.1.2) die Vergrösserungsparametervariable (*P*) auf ihren gegebenen Wert zwingen.

6. Methode gemäss Anspruch 3, wobei die Kostenmatrix (*Q*) positiv-definit ist, **dadurch gekennzeichnet, dass** die QP-Variable (*z*) dieselbe Dimension wie die Entscheidungsvariable (*u*) aufweist und erhalten wird durch Abbildung der Parametervariablen (*c, p*) auf die Entscheidungsvariable (*u*).

**Revendications**

1. Planificateur de production pour une planification optimale d'un processus de production industriel déterminé par

   - une variable de décision (*u*) et des contraintes (*A, b*) sur la variable de décision (*u*),
   - des variables en paramètre (*b, c, p*) représentant des limites généralisées, des coûts et des revenus,
   - une matrice de coûts (*Q*) semi-définie positive,
   - une fonction objective dépendante, de manière quadratique et par l'intermédiaire de la matrice de coûts (*Q*), de la variable de décision (*u*) et dépendante, de manière bilinéaire, de la variable de décision (*u*) et des variables en paramètre (*b, c, p*),

   dans lequel le planificateur comporte des moyens de calcul pour calculer un plan de production u\* optimal pour un ensemble donné de valeurs de paramètre,
   **caractérisé en ce que** le planificateur comporte des moyens de calcul pour évaluer une expression algébrique pour le plan de production optimal u\*(*b, c, p*) en fonction des variables en paramètre (*b, c, p*).

2. Planificateur de production suivant la revendication 1, **caractérisé en ce que** l'expression algébrique pour le plan de production optimal u\*(*b, c, p*) est obtenue par

   a) la formulation d'un problème de programmation quadratique à plusieurs paramètres (mp-QP) avec

      - une variable QP (*z*) définie sur la base de la variable de décision (*u*) et des variables en paramètre (*b, c, p*),
      - la fonction objective réécrite sous forme quadratique généralisée (eq.1.1, eq.2.1) en fonction de la variable QP (*z*),
      - des contraintes linéaires sur la variable QP (*z*) (eq. 1.2, eq.2.2) définies sur la base des contraintes (*A, b*) sur la variable de décision (*u*) et les variables en paramètre (*b, c, p*),

   b) la résolution du problème de programmation quadratique (mp-QP) en vue d'une expression algébrique pour la variable QP optimale *z*\* en fonction des variables en paramètre (*b, c, p*), et
   c) la dérivation de l'expression algébrique pour le plan de production optimale u\*(*b, c, p*) à partir de l'expression algébrique pour la variable QP optimale *z*\*.

3. Méthode pour optimiser un plan de production d'un processus de production industriel déterminé par

   - une variable de décision (*u*) et des contraintes (*A, b*) sur la variable de décision (*u*),
   - des variables en paramètre (*b, c, p*) représentant des limites généralisées, des coûts et des revenus,
   - une matrice de coûts (*Q*) semi-définie positive,
   - une fonction objective dépendante, de manière quadratique et par l'intermédiaire de la matrice de coûts (*Q*), de la variable de décision (*u*) et dépendante, de manière bilinéaire, de la variable de décision (*u*) et des variables en paramètre (*b, c, p*),

   **caractérisé en ce que** une expression algébrique pour le plan de production optimal u\*(*b, c, p*) en fonction des variables en paramètre ($b$, $c$, $p$) est obtenue par

a) la formulation d'un problème de programmation quadratique à plusieurs paramètres (mp-QP) avec

- une variable QP ($z$) définie sur la base de la variable de décision ($u$) et des variables en paramètre ($b$, $c$, $p$),
- la fonction objective réécrite sous forme quadratique généralisée (eq.1.1, eq.2.1) en fonction de la variable QP ($z$),
- des contraintes linéaires sur la variable QP ($z$) (eq.1.2, eq.2.2) définies sur la base des contraintes ($A$, $b$) sur la variable de décision ($u$) et les variables en paramètre ($b$, $c$, $p$),

b) la résolution du problème de programmation quadratique (mp-QP) en vue d'une expression algébrique pour la variable QP optimale $z^*$ en fonction des variables en paramètre ($b$, $c$, $p$),
c) la dérivation de l'expression algébrique pour le plan de production optimal u*($b$, $c$, $p$) à partir de l'expression algébrique pour la variable QP optimale $z^*$,

et **en ce que** l'expression algébrique pour le plan de production optimal u*($b$, $c$, $p$) obtenue est évaluée en tant que fonction des variables en paramètre ($b$, $c$, $p$).

4. Méthode suivant la revendication 3, **caractérisé en ce que** l'expression algébrique pour le plan de production optimal u*($b$, $c$, $p$) est évaluée en ligne suivant un changement de la valeur d'une variable en paramètre ($b$, $c$, $p$).

5. Méthode suivant la revendication 3, **caractérisé en ce que** la variable QP ($z$) est d'une dimension doublée par rapport à la dimension de la variable de décision ($u$) et est obtenue en augmentant la variable de décision ($u$) par une variable en paramètre augmentant ($P$) équivalente à une différence entre les variables en paramètre ($c$-$p$), et **en ce que** des contraintes sur la variable QP ($z$) (eq.1.2) contraignent la variable en paramètre augmentant ($P$) à sa valeur donnée.

6. Méthode suivant la revendication 3, dans laquelle la matrice de coûts ($Q$) est définie positive, **caractérisé en ce que** la variable QP ($z$) est de la même dimension que la variable de décision ($u$) et est obtenue en incluant les variables en paramètre ($c$, $p$) dans la variable de décision ($u$).

**Fig.1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. GALLESTEY et al.** Using Model Predictive Control and Hybrid Systems for Optimal Scheduling of Industrial Processes. *AT Automatisierungstechnik,* 2003, vol. 51 (6), 285-293

- **P. TONDEL et al.** An Algorithm for Multi-Parametric Quadratic Programming and Explicit MPC Solutions. *Automatica,* March 2003, vol. 39 (3), 489-497